(19) Europäisches Patentamt
European Patent Office
Office européen des brevets

(11) Veröffentlichungsnummer: **0 372 324 A2**

(12) **EUROPÄISCHE PATENTANMELDUNG**

(21) Anmeldenummer: **89121776.2**

(22) Anmeldetag: **24.11.89**

(51) Int. Cl.[5]: **C08L 67/03, C08L 69/00, C08L 51/04, C08L 25/06, C08L 33/12, C08L 67/02, C08K 5/49, C08L 27/18**

(30) Priorität: **07.12.88 DE 3841183**

(43) Veröffentlichungstag der Anmeldung: **13.06.90 Patentblatt 90/24**

(84) Benannte Vertragsstaaten: **DE FR GB IT NL**

(71) Anmelder: **BAYER AG**

**D-5090 Leverkusen 1 Bayerwerk(DE)**

(72) Erfinder: **Wittmann, Dieter, Dr.**
**Wolfskaul 4**
**D-5000 Köln 80(DE)**
Erfinder: **Eckel, Thomas, Dr.**
**Gneisenaustrasse 15 a**
**D-4047 Dormagen 1(DE)**
Erfinder: **Peters, Horst, Dr.**
**Winterberg 25**
**D-5090 Leverkusen 3(DE)**
Erfinder: **Schoeps, Jochen, Dr.**
**Windmühlenstrasse 126**
**D-4150 Krefeld(DE)**
Erfinder: **Leitz, Edgar, Dr.**
**Goethestrasse 63**
**D-4047 Dormagen 1(DE)**
Erfinder: **Ott, Karl-Heinz, Dr.**
**Paul-Klee-Strasse 54**
**D-5090 Leverkusen 1(DE)**

(54) **Polyester-Formmassen mit flammwidrigen Eigenschaften.**

(57) Durch Zusatz von Phosphorsäureestern, Tetrafluorethylenpolymerisaten und gegebenenfalls Halogenverbindungen werden die Polyester-Formmassen flammwidrig ausgerüstet, wobei die mechanischen Eigenschaften und die Verarbeitbarkeit der Formmassen nicht beeinträchtigt werden.

EP 0 372 324 A2

## Polyester-Formmassen mit flammwidrigen Eigenschaften

Die vorliegende Erfindung betrifft Polyester-Formmassen, die durch einen Zusatz von Phosphorsäureestern, Tetrafluorethylenpolymerisaten und gegebenenfalls Halogenverbindungen flammwidrig ausgerüstet sind.

Flammwidrig ausgerüstete Formmassen auf Basis von vollaromatischen Polyestern oder Polyestercarbonaten sind bekannt. So wird in der US 44 30 484 die reduzierte Brennbarkeit, erhöhte Formbeständigkeit und Zugfestigkeit von Mischungen aus aromatischen Polyestercarbonaten mit aromatischen Polyamiden, Polyamidimiden und/oder Polyetherimiden hervorgehoben.

Die DE 33 32 396 lehrt, daß flammfeste Formkörper aus Mischungen von Polycarbonaten, aromatischen Polyestern und/oder aromatischen Polyestercarbonaten mit aromatischen Polyphosphonaten und Polyepoxiden erhältlich sind.

Gemäß EP 00 67 850 weisen Mischungen aus aromatischen Polyestercarbonaten und Polyethersulfonen verbesserten Flammschutz und Schlagzähigkeit auf.

Laut US 45 71 419 läßt sich u.a. das Brandverhalten von Blends aus u.a. Polycarbonaten, Polyestern, Polysulfonen, Polyetherimiden mit Polyestercarbonaten durch Zusatz spezieller aromatischer Polyestercarbonate auf Basis von methylierten Dihydroxydiphenylsulfonen verbessern.

Aus der JP-A 56 005 848 war bekannt, daß 1 bis 100 Gew.-Teile eines fluorierten Harzes, wie Polytetrafluorethylen (nachfolgend genannt: PTFE), bezogen auf 100 Gew.-Teile aromatisches Polyestercarbonat, die Verarbeitbarkeit und die Abriebfestigkeit erhöhen.

Darüber hinaus waren aus der JP-A 60 035 048 Formmassen aus 20 bis 80 Gew.-% aromatischem Polyestercarbonat, 10 bis 70 Gew.-% faserförmigem Verstärkungsmittel oder anorganischem Füllstoff und 0,5 bis 20 Gew.-% fluoriertem Harz, wie PTFE, bekannt. Diese Formmassen sollen ausgezeichnete mechanische Eigenschaften, hohe Wärmeformbeständigkeit, geringen Schrumpf und gute Entformbarkeit besitzen.

Aufgabe der vorliegenden Erfindung ist es, flammwidrig ausgerüstete Formmassen auf Basis vollaromatischer Polyester bereitzustellen, die in der Kombination der Eigenschaften wie Flammwidrigkeit, Verarbeitbarkeit und Schlagzähigkeit den Formmassen des Standes der Technik überlegen sind.

Überraschenderweise wurde nun gefunden, daß sich die erwähnte Eigenschaftskombination dann erreichen läßt, wenn man voll-aromatische Polyester mit fluorierten Polyolefinen und Phosphaten versetzt. Die Eigenschaftsvorteile kommen auch dann zum Tragen, wenn man den Formmassen zusätzliche thermoplastische Harze und/oder Pfropfpolymerisate und/oder Halogen-(Cl,Br)Verbindungen zusetzt.

Gegenstand der Erfindung sind somit thermoplastische Formmassen bestehend aus

A) 40 bis 100 Gew.-Teilen, vorzugsweise 60 bis 98 Gew.-Teilen, besonders bevorzugt 70 bis 93 Gew.-Teilen eines voll-aromatischen Polyesters, gegebenenfalls

B) 0,1 bis 40 Gew.-Teilen, vorzugsweise 1 bis 20 Gew.-Teilen, besonders bevorzugt 2 bis 12 Gew.-Teilen eines Pfropfpolymerisats, gegebenenfalls

C) 0,1 bis 40 Gew.-Teilen, vorzugsweise 1 bis 30 Gew.-Teilen, besonders bevorzugt 5 bis 20 Gew.-Teilen eines thermoplastischen Harzes, welches

C1) ein Copolymerisat aus

C1.1) 50 bis 95 Gew.-Teilen Styrol, α-Methylstyrol, kernsubstituiertem Styrol, Methylmethacrylat oder Mischungen daraus, und

C1.2) 50 bis 5 Gew.-Teilen (Meth-)Acrylnitril, Methylmethacrylat, Maleinsäureanhydrid, N-substituiertem Maleinimid oder Mischungen daraus, oder

C2) ein Polyalkylenterephthalat darstellt, wobei die Summe der Gewichtsteile aus A) bis C) jeweils 100 Gew.-Teile ergeben soll, sowie

D) 0,5 bis 20 Gew.-Teilen, vorzugsweise 1 bis 15 Gew.-Teilen, besonders bevorzugt 2 bis 12 Gew.-Teilen, bezogen auf 100 Gew.-Teile der Summe aus A) bis C), einer Phosphorverbindung der Formel (I)

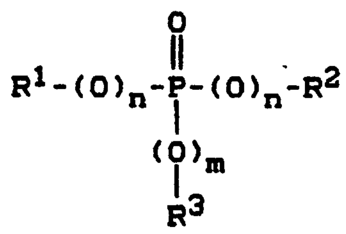

(I),

worin

$R^1$, $R^2$ und $R^3$ unabhängig voneinander gegebenenfalls halogeniertes $C_1$-$C_8$-Alkyl oder gegebenenfalls halogeniertes $C_6$-$C_{20}$-Aryl,

m 0 oder 1 und

n 0 oder 1 bedeuten, und

E) 0,05 bis 5 Gew.-Teilen, vorzugsweise 0,1 bis 1 Gew.-Teil, besonders bevorzugt 0,1 bis 0,5 Gew.-Teilen, bezogen auf 100 Gew.-Teile der Summe aus A) bis C) eines fluorierten Polyolefins mit mittleren Teilchengrößen von 0,05 bis 1000 µm, einer Dichte von 1,2 bis 2,3 g/cm³ und einem Fluorgehalt von 65 bis 76 Gew.-%, wobei die Komponente E) vorzugsweise in Form einer koagulierten Mischung von Emulsionen der fluorierten Polyolefine E) mit einer mittleren Teilchengröße von 0,05 bis 20 µm und einer Dichte von 1,2 bis 1,9 g/cm³ mit Emulsionen von Pfropfpolymerisaten B) eingesetzt wird und wobei das Gewichtsverhältnis Pfropfpolymerisat B) zu fluoriertem Polyolefin E) 95:5 bis 60:40 beträgt und der Gehalt an zusätzlichen Mengen B), bezogen auf 100 Gew.-Teile A) bis C), bei 0,1 bis 4 Gew.-Teilen liegt, und gegebenenfalls

F) 0,1 bis 30 Gew.-Teilen, vorzugsweise 0,5 bis 20 Gew.-Teilen, besonders bevorzugt 1 bis 10 Gew.-Teilen, bezogen auf 100 Gew.-Teile der Summe aus A) bis C), einer nieder- oder hochmolekularen Halogen-(Br,Cl)-Verbindung.

Den erfindungsgemäßen Formmassen können in wirksamen Mengen (leicht durch Vorversuche zu ermitteln) übliche Stabilisatoren, Farbstoffe, Pigmente, Nukleierungsmittel, Füll- und Verarbeitungsstoffe, Gleit- und Entformungsmittel und/oder Antistatika zugesetzt werden.

In einer besonders bevorzugten Ausführungsform enthalten die Formmassen die Komponente F) überhaupt nicht, und die Komponenten A) bis E) sind halogen-(Br,Cl)-frei. "Halogen-(Br,Cl)-frei" im Sinne der vorliegenden Erfindung bedeutet dabei, daß die Komponenten A) bis E) entweder aus chlor- und bromfreien Ausgangsverbindungen aufgebaut sind, oder daß bei Verwendung halogen-(Br,Cl)-haltiger Ausgangsstoffe (wie Terephthalsäuredichlorid, Phosgen) oder Lösungsmittel (wie Chlorbenzol, Methylenchlorid) bei der Herstellung der Komponenten A) bis E), die fertigen Produkte A) bis E) nur noch unbedeutende Mengen an Chlor- oder Bromverbindungen enthalten (<0,1 Gew.-% Chlor oder Brom).

Voll-aromatische Polyester A) im Sinne der Erfindung sind aromatische Polyester sowie aromatische Polyestercarbonate, die überwiegend bis ausschließlich aus aromatischen $C_6$-$C_{14}$-Dicarbonsäuren, $C_6$-$C_{30}$-Diphenolen und im Falle der Polyestercarbonate noch aus Kohlensäurederivaten, z.B. Phosgen, aufgebaut sind.

Als aromatische Dicarbonsäuren kommen beispielsweise in Frage: Isophthalsäure, Terephthalsäure, Diphenylether-4,4′-dicarbonsäure und/oder Naphthalin-2,6-dicarbonsäure. Bevorzugt sind Iso- und Terephthalsäure. Bevorzugtes Kohlensäurederivat ist Phosgen.

Als Diphenole für die Herstellung der voll-aromatischen Polyester A) kommen in Frage Verbindungen der Formel (II):

HO-Z-OH (II),

worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Bevorzugte Diphenole sind Verbindungen der Formel (III)

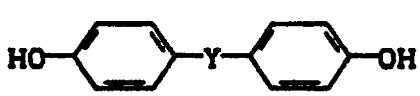

(III),

in der

Y eine Einfachbindung, einen Alkylen- oder Alkylidenrest mit 1 bis 7 C-Atomen, einen Cycloalkylen- oder

Cycloalkylidenrest mit 5 bis 12 C-Atomen, -O-, -S-, $-\underset{\underset{O}{\|}}{S}-$,

$-SO_2-$ oder $-\underset{\underset{O}{\|}}{C}-$

bedeutet sowie deren kernalkylierte und kernhalogenierte Derivate, z.B:
Hydrochinon,
Resorcin,
Dihydroxydiphenyle,
Bis-(hydroxyphenyl)-alkane,
Bis-(hydroxyphenyl)-cycloalkane, Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)-diisopropylbenzole
sowie deren kernalkylierte und kernhalogenierte Derivate.

Genannt werden z.B.: Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon sowie deren di- und tetrahalogenierte Derivate. Bevorzugt ist Bisphenol A. Es können auch beliebige Mischungen der genannten Diphenole untereinander verwendet werden.

Mögliche Verzweigungsmittel sind in den DE-OS 2 940 024 und DE-OS 3 007 934 genannt.

Als Kettenabbrecher für die voll-aromatischen Polyester A) werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säurechloride) verwendet. Weiterhin kommen die Chloride von aliphatischen Monocarbonsäuren mit bis zu 22 C-Atomen in Betracht.

Am Aufbau der voll-aromatischen Polyester A) können auch 0,1 bis 30 Mol-% der Dicarbonsäuren und Dihydroxyverbindungen durch aliphatische Baugruppen, z.B. Adipinsäure und Butandiol-1,4, ersetzt sein.

Weiterhin können die voll-aromatischen Polyester A) teilweise aus aromatischen Hydroxycarbonsäuren, wie p-Hydroxy-benzoesäure, aufgebaut sein. Der Anteil solcher Hydroxycarbonsäuren kann bis zu 100 Mol-%, bevorzugt 30 bis 50 Mol-% (bezogen auf Bisphenol), betragen.

Falls Iso- und Terephthalsäure gemeinsam am Aufbau der voll-aromatischen Polyester A) beteiligt sind, kann der Terephthalsäureanteil ca. 1 bis 99 %, bevorzugt 25 bis 75 % des Gesamtesteranteiles betragen.

Die voll-aromatischen Polyester A) können bis zu 80 Mol-%, insbesondere 10 bis 60 Mol-%, besonders bevorzugt 30 bis 55 Mol-% an Carbonatgruppen, bezogen auf die Summe von Ester- und Carbonatgruppen, enthalten.

Sowohl der Ester- als auch der Carbonatanteil der vollaromatischen Polyester A) kann in Form von Blöcken oder statistisch verteilt im Polykondensat vorliegen. Ein gewünschter Carbonatgruppengehalt kann auch durch Mischen von voll-aromatischem Polyester mit aromatischem Polycarbonat eingestellt werden.

Die Herstellung der voll-aromatischen Polyester A) ist bekannt und z.B. in den DE-OS 1 495 626, 2 232 877, 2 703 376, 3 000 610, 2 714 544, 2 940 024, 3 007 934 beschrieben. Besonders bevorzugt ist das Phasengrenzflächenverfahren.

Die relative Lösungsviskosität ($\eta_{rel}$) der voll-aromatischen Polyester A) liegt im Bereich von ca 1,18 bis 1,4, vorzugsweise 1,22 bis 1,3 (gemessen an Lösungen von 0,5 g Polyester in 100 ml $CH_2Cl_2$-Lösung bei 25 °C).

Die Pfropfpolymerisate B) umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393 - 406 und in C.B. Bucknall, "Toughened Plastics", Appl. Science Publishers, London 1977, beschrieben sind. Bevorzugte Polymerisate B) sind partiell vernetzt und besitzen Gelgehalte von über 20 Gew.-%, vorzugsweise über 40 Gew.-%, insbesondere über 60 Gew-%.

Bevorzugte Pfropfpolymerisate B) umfassen Pfropfpolymerisate aus:

B1) 5 bis 90, vorzugsweise 30 bis 80, Gew.-Teile, einer Mischung aus

B1.1) 50 bis 95 Gew.-Teilen Styrol, $\alpha$-Methylstyrol, halogen- oder methylkernsubstituierte Styrole, Methylmethacrylat oder Mischungen dieser Verbindungen und

B1.2) 5 bis 50 Gew-Teilen Acrylnitril, Methacrylnitril, Methylmethacrylat, Maleinsäureanhydrid, $C_1$-$c_4$-alkyl- bzw. phenyl-N-substituierte Maleinimide oder Mischungen dieser Verbindungen auf

B2) 10 bis 95, vorzugsweise 20 bis 70, Gew.-Teilen Polymerisat mit einer Glasübergangstemperatur unter -10° C.

Bevorzugte Pfropfpolymerisate B) sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Cpolymerisate, Polyisobutene oder Polyisoprene, wie sie z.B. in der DE-OS 2 348 377 (= US-PS 3 919 353) beschrieben sind.

Besonders bevorzugte Polymerisate B) sind z.B. ABS-Polymerisate, wie sie z.B in der DE-OS 2 035 390 (= US-PS 3 644 574) oder in der DE-OS 2 248 242 (= GB-PS 1 409 275) beschrieben sind.

Besonders bevorzugte Pfropfpolymerisate B) sind Pfropfpolymerisate, die durch Pfropfreaktion von

I. 10 bis 70, vorzugsweise 15 bis 50, insbesondere 20 bis 40, Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage erhältlich ist, wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats B) 0,05 bis 2, vorzugsweise 0,1 bis 0,6 µm, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B) auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Besonders bevorzugte Pfropfpolymerisate B) sind z.B. auch Pfropfpolymerisate aus

(a) 20 bis 90 Gew.-%, bezogen auf B), Acrylatkautschuk mit einer Glasübergangstemperatur unter -20° C als Pfropfgrundlage und

(b) 10 bis 80 Gew.-%, bezogen auf B), mindestens eines polymerisierbaren, ethylenisch ungesättigten Monomeren, dessen bzw. deren in Abwesenheit von a) entstandenen Homo- bzw. Copolymerisate eine Glasübergangstemperatur über 25° C hätten, als Pfropfmonomere.

Die Acrylatkautschuke (a) der Polymerisate B) sind vorzugsweise Polymerisate aus Acrylsäurealkylestern, gege benenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di-und Trivinylbenzole; aber auch Triallylphosphat und Diallylphthalat.

Bevorzugte vernetzende Monomere sind Allylmethacrylat, Ethylenglykoldimethacrylat, Diallylphthalat

und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den DE 37 04 657, DE 37 04 655, DE 36 31 540 und DE 36 31 539 beschrieben werden.

Der Gelgehalt der Pfropfgrundlage (a) wird bei 25° C in Dimethylformamid bestimmt (M. Hoffmann, H. Krömer, R. Kuhn, Polymeranalytik I und II, Georg Thieme-Verlag, Stuttgart 1977).

Die für die bevorzugte Ausführungsform der gemeinsamen Fällung mit dem Tetrafluorethylenpolymerisat E) zu verwendenden wäßrigen Dispersionen von Pfropfpolymerisat B) besitzen im allgemeinen Feststoffgehalte von 25 bis 60, vorzugsweise von 30 bis 45 Gew.-%.

Als Komponente C) einsetzbare thermoplastische Harze umfassen Copolymerisate C1) und Polyalkylenterephthalate C2).

Als Copolymerisate C1) geeignet im Sinne der Erfindung sind solche aus wenigstens einem Monomeren aus der Reihe Styrol, $\alpha$-Methylstyrol, Methylmethacrylat, gemäß C1.1) mit wenigstens einem Monomeren aus der Reihe Acrylnitril, Methacrylnitril, Methylmethacrylat, Maleinsäureanhydrid gemäß C1.2).

Copolymerisate gemäß Komponente C1) entstehen häufig bei der Pfropfpolymerisation zur Herstellung der Komponente B) als Nebenprodukte, besonders dann, wenn große Mengen Monomere auf kleine Mengen Kautschuk gepfropft werden

Die erfindungsgemäß einzusetzende Menge an Copolymerisat C1) bezieht diese Nebenprodukte der Pfropfpolymerisation nicht mit ein.

Die Copolymerisate gemäß Komponente C1) sind harzartig, thermoplastisch und kautschukfrei. Besonders bevorzugte Copolymerisate C1) sind solche aus Styrol mit Acrylnitril und gegebenenfalls mit Methylmethacrylat, aus $\alpha$-Methylstyrol mit Acrylnitril und gegebenenfalls mit Methylmethacrylat oder aus Styrol und $\alpha$-Methylstyrol mit Acrylnitril und gegebenenfalls mit Methylmethacrylat.

Besonders bevorzugte Gewichtsverhältnisse im thermoplastischen Copolymerisat C1) sind 60 bis 80 Gew.-% C1.1) und 40 bis 20 Gew.-% C1.2).

Die Copolymerisate gemäß Komponente C1) sind bekannt und lassen sich durch radikalische Polymerisation, insbesondere durch Emulsions-, Suspensions-, Lösungs- und Massepolymerisation herstellen. Die Copolymerisate gemäß Komponente C1) besitzen vorzugsweise Molekulargewichte $\overline{M}_w$ (Gewichtsmittel, ermittelt durch Lichtstreuung oder Sedimentation) zwischen 15 000 und 200 000.

Polyalkylenterephthalate C2) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser-Verlag, München, 1973).

Bevorzugte Polyalkylenterephthalate C2) können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4′-Diphenyldicarbonsäure, Bernstein-, Adipin-, Sebacin-, Azelain- und/oder Cyclohexadiessigsäure.

Die bevorzugten Polyalkylenterephthalate C2) können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethylcyclobutan, 2,2-Bis-(3-ß-hydroxyethoxyphenyl)-propan und/oder 2,2-Bis-(4-hydroxypropoxyphenyl)-propan (DE-OS 24 07 647, 24 07 776, 27 15 932).

Die Polyalkylenterephthalate C2) können durch Einbau relativ kleiner Mengen 3- oder 4-wertiger

Alkohole oder 3- oder 4-basischer Carbonsäure, wie sie z.B. inn der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und/oder Pentaerythrit.

Besonders bevorzugt sind Polyalkylenterephthalate C2), die allein aus Terephthalsäure oder deren reaktionsfähigen Derivaten (.B. deren Dialkylestern) und Ethylenglykol und/oder Butandiol-1,4 hergestellt worden sind, und Mischungen dieser Polyalkylenterephthalate.

Die als Komponente C2) vorzugsweise verwendeten Polyalkylenterephthalate besitzen im allgemeinen eine Intrin sic-Viskosität von 0,4 bis 1,5 gl/g, vorzugsweise 0,5 bis 1,3 dl/g, insbesondere 0,6 bis 1,2 dl/g, jeweils gemessen in Phenol/o-Dichlorbenzol (1:1 Gewichtsteile) bei 25° C.

Die erfindungsgemäß geeigneten Phosphorverbindungen gemäß Komponente D) sind generell bekannt (s. beispielsweise Ullmanns Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177). Bevorzugte Substituenten $R^1$ bis $R^3$ umfassen Methyl, Butyl, Octyl, Chlorethyl, 5-Chlorpropyl, 2,3-Dibrompropyl, Phenyl, Kresyl, Cumyl, Naphthyl, Chlorphenyl, Bromphenyl, Pentachlorphenyl und Pentabromphenyl.

Bevorzugte Phosphorverbindungen D) (Formel (I)) umfassen beispielsweise Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid und Trikresylphosphinoxid.

Die fluorierten Polyolefine E) sind hochmolekular und besitzen Glasübergangstemperaturen von über -30° C, in der Regel von über 100° C, Fluorgehalte, vorzugsweise von 65 bis 76, insbesondere von 70 bis 76, Gew.-%, mittlere Teilchendurchmesser $d_{50}$ von 0,05 bis 1000, vorzugsweise 0,08 bis 20 µm und eine Dichte von 1,2 bis 2,3 g/cm³. Bevorzugte fluorierte Polyolefine E) sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymers" von Schildknecht, John Wiley & Sons, Inc., New York, 1962, Seite 484 -494; "Fluorpolymers" von Wall, Wiley-Interscience, John Wiley & Sons, Inc., New York, Band 13, 1970, Seite 623-654; "Modern Plastics Encyclopedia", 1970 - 1971, Band 47, Nr 10 A, Oktober 1970, Mc Graw-Hill, Inc., New York, Seite 134 und 774; "Modern Plastics Encyclopedia", 1975 - 1976, Oktober 1975, Band 52, Nr 10 A, Mc Graw-Hill, Inc., New York, Seite 27, 28 und 475 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium-oder Ammoniumperoxidisulfat bei Drucken von 7 bis 71 kg/cm² und bei Temperaturen von 0 bis 200° C, vorzugsweise bei Temperaturen von 20 bis 100° C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,05 und 1000 µm liegen.

Erfindungsgemäß bevorzugte fluorierte Polyolefine E) sind Tetrafluorethylenpolymerisate und haben mittlere Teilchengrößen von 0,05 bis 20 µm, vorzugsweise 0,08 bis 10 µm, und eine Dichte von 1,2 bis 1,9 g/cm³ und werden in Form einer koagulierten Mischung von Emulsionen der Tetrafluorethylenpolymerisate E) mit Emulsionen der Pfropfpolymerisate B) eingesetzt.

Geeignete, in Pulverform einsetzbare fluorierte Polyolefine E) sind Tetrafluorethylenpolymerisate und haben z.B. Teilchengrößen von 100 bis 1000 µm und Dichten von 2,0 g/cm³ bis 2,3 g/cm³.

Zur Herstellung einer koagulierten Mischung aus B) und E) wird zuerst eine wäßrige Emulsion (Latex) eines Pfropfpolymerisates B) mit mittleren Latexteilchengrößen von 0,05 bis 2 µm, insbesondere 0,1 bis 0,6 um, mit einer feinteiligen Emulsion eines Tetrafluorethylenpolymerisates E) in Wasser mit mittleren Teilchengrößen von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate B) besitzen Feststoffgehalte von 25 bis 50 Gew.-%, vorzugsweise von 30 bis 45 Gew.-%.

In der Emulsionsmischung liegt das Gewichtsverhältnis Pfropfpolymerisat B) zum Tetrafluorethylenpolymerisat E) bei 95:5 bis 60:40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischba ren Lösemitteln, wie Alkoholen, Ketonen, vorzugsweise bei Temperaturen von 50 bis 150° C, insbesondere von 50 bis 100° C. Falls erforderlich, kann bei 50 bis 200° C, bevorzugt 70 bis 100° C, getrocknet werden.

Geeignete Tetrafluorethylenpolymerisat-Emulsionen sind handelsübliche Produkte und werden beispielsweise von der Firma DuPont als Teflon® 30 N angeboten.

Erfindungsgemäße Komponente F) sind Halogenverbindungen aus der Reihe Chlor- und Bromverbindungen. Sie werden im allgemeinen in Mengen von 0,1 bis 30 Gew.-%, bezogen auf flammwidrige Formmasse, eingesetzt. Besonders bevorzugt werden Mengen entsprechend einem Halogengehalt des Flammschutzmittels, bezogen auf flammwidrige Formmasse, von 3 bis 10 Gew.-%.

Geeignete Flammschutzmittel sind im Prinzip alle chlorierten oder bromierten Verbindungen, die bei der Herstellung oder Verarbeitung der erfindungsgemäßen Formmassen, also bei Temperaturen von 200 bis 330° C, weder flüchtig sind noch zur Zersetzung neigen; d.h. sie dürfen unter den genannten Bedingungen kein Halogen abspalten, so daß sie im Bedarfsfall ihre Flammschutzwirkung noch entfalten können.

Beispiele für bevorzugte Flammschutzmittel umfassen beispielsweise Decabromdiphenylether, Octabromdiphenyl, Octabromdiphenylether und Tribromtetrachlortoluol, ferner oligomere Bromverbindungen, wie z.B. Oligocarbonate auf Basis Tetrabrombisphenol A, und schließlich auch hochmolekulare Bromverbindungen, wie hochmolekulare Polycarbonate auf Basis Tetrabrombisphenol A oder kernbromierte Polyphenylenoxide.

Der gegebenenfalls gewünschte Halogengehalt kann aber auch über die Komponente A) eingebracht werden, indem man bei der Herstellung von A) halogenierte Ausgangsverbindungen, beispielsweise kernhalogeniertes Diphenol (II) einsetzt.

Als synergistisch wirkende Mittel können die Formmassen Schwermetallverbindungen wie Antimontrioxid enthalten; vgl. z.B. DE-OS 22 55 654, 23 10 742, 26 15 071, 26 22 414, 30 00 660, 30 02 985, 33 22 260, EP-A 63 031, US-PS 3 936 400, 4 280 005 und 4 344 878.

Die erfindungsgemaßen Formmassen besitzen jedoch eine hohe Flammwidrigkeit auch ohne Zusatz von üblichen Metallsynergisten und können sogar, wenn korrosive Brandgase vermieden werden müssen, ohne jegliche chlor- und bromhaltigen Flammschutzmittel ohne wesentliche Eigenschaftseinbußen hergestellt werden.

Die erfindungsgemäßen Formmassen können übliche Additive, wie Gleit- und Entformungsmittel, Nukleiermittel, Antistatika, Stabilisatoren, Füll- und Verstärkungsstoffe sowie Farbstoffe und Pigmente enthalten.

Die gefüllten bzw. verstärkten Formmassen können bis zu 60, vorzugsweise 10 bis 60 Gew.-%, bezogen auf die gefüllte bzw. verstärkte Formmasse, Füll- und/oder Ver stärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A), D) und E) sowie gegebenenfalls B), C) und/oder F) und gegebenenfalls weiteren bekannten Zusätzen wie Stabilisatoren, Farbstoffen, Pigmenten, Gleit- und Entformungsmitteln, Füll- und Verstärkungsstoffen, Nukleiermittel sowie Antistatika, werden hergestellt, indem man die jeweiligen Bestandteile in bekannter Weise vermischt und bei Temperaturen von 200° C bis 330° C in üblichen Aggregaten wie Innenknetern, Extrudern und Doppelwellenschnekken schmelzcompoundiert oder schmelzextrudiert, wobei die Komponente E) vorzugsweise in Form der bereits erwähnten koagulierten Mischung eingesetzt wird.

Gegenstand der vorliegenden Erfindung ist somit auch ein Verfahren zur Herstellung von thermoplastischen Formmassen, bestehend aus den Komponenten A), D) und E) und gegebenenfalls den Komponenten B), C) und/oder F) sowie gegebenenfalls Stabilisatoren, Farbstoffen, Pigmenten, Gleit- und Entformungsmitteln, Füll- und Verstärkungsstoffen, Nukleiermitteln sowie Antistatika, das dadurch gekennzeichnet ist, daß man die Komponenten A), D) und E) und gegebenenfalls die Komponenten B), C) und/oder F) sowie gegebenenfalls Stabilisatoren, Farbstoffe, Pigmente, Fließmittel, Füll- und Verstärkungsstoffe, Gleit-und Entformungsmittel, Nukleiermittel und/oder Anti statika nach erfolgter Vermischung bei Temperaturen von 200 - 330° C in gebräuchlichen Aggregaten schmelzcompoundiert oder schmelzextrudiert, wobei die Komponente E) vorzugsweise in Form einer koagulierten Mischung mit der Komponente B) eingesetzt wird.

Die Vermischung der einzelnen Bestandteile kann in bekannter Weise sowohl sukzessive als auch simultan erfolgen, und zwar sowohl bei etwa 20° C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

## Beispiele

Teilchengröße bedeutet immer mittlerer Teilchendurchmesser $d_{50}$, ermittelt durch Ultrazentrifugenmessungen nach W. Scholtan et al, Colloids, u. Z. Polymere 250 (1972) 785-796.

Angegebene Teile bedeuten Gewichtsteile

## 1 Eingesetzte Komponenten

A. Vollaromatisches Polyestercarbonat

Polyestercarbonat mit einem Esteranteil von 50 Mol-% auf Basis von Bisphenol A, Iso- und Terephthalsäure (1:1) mit 3 Mol-%, bezogen auf Bisphenol A-Einheiten, p-Isooctylphenol-Endgruppen, mit einer relativen Viskosität $\eta_{rel}$ von 1,30 (gemessen an einer Lösung von 0,5 g Polyestercarbonat in 100 ml $CH_2Cl_2$ bei 25 °C).

B. Pfropfpolymerisat

B.1

SAN-Pfropfpolymerisat von 50 Gew.-% Styrol-Acrylnitril-Gemisch (im Gew.-Verhältnis von 72:28) auf 50 Gew.-% teilchenförmiges Polybutadien einer mittleren Teilchengröße ($d_{50}$) von 0,4 µm, erhalten durch Emulsionspolymerisation (s. Deutsche Patentanmeldung P 37 08 913.7, Vergleichsbeispiel 2.1.2).

B.2

SAN-Pfropfpolymerisat von 50 Gew.-% Styrol-Acrylnitril-Gemisch (im Gew.-Verhältnis von 72:28) auf 50 Gew.-% teilchenförmigen Silikonkautschuk ($d_{50}$ = 0,3 µm), hergestellt gemäß DE 36 31 540 durch Emulsionspolymerisation.

C. Thermoplastisches Harz

C.1 Copolymerisat

Styrol/Acrylnitril-Copolymerisat mit einem Styrol-Acrylnitril-Verhältnis von 72:28 und einer Grenzviskosität von [η] 0,55 dl/g (Messung in Dimethylformamid bei 20 °C).

C.2 Polyalkylenterephthalat

Lineares Polyethylenterephthalat mit einer Intrinsic-Viskosität [η] = 0,85 dl/g, gemessen in Phenol/o-Dichlorbenzol (1:1 Gew.-Tl.) bei 25 °C und einer Konzentration von 0,5 g/dl.

D. Triphenylphosphat

E. Fluoriertes Polyolefin

E.1

Tetrafluorethylenpolymerisat als koagulierte Mischung aus einer SAN-Pfropfpolymerisat-Emulsion gemäß B. in Wasser und einer Tetrafluorethylenpolymerisat-Emulsion in Wasser Das Gewichtsverhältnis

Pfropfpolymerisat B. zum Tetrafluorethylenpolymerisat E. in der Mischung ist 90 Gew.-% zu 10 Gew.-%. Die Tetrafluorethylenpolymeri sat-Emulsion besitzt einen Feststoffgehalt von 60 Gew.-%, die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

Herstellung von E.1

Die Emulsion des Tetrafluorethylenpolymerisats wurde mit der Emulsion des SAN-Pfropfpolymerisats B. vermischt und mit 1,8 Gew.-%, bezogen auf Polymerfeststoff, phenolischer Antioxidantien stabilisiert. Bei 85 bis 95° C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100° C zu einem Pulver getrocknet. Dieses Pulver kann dann mit den weiteren Komponenten in den beschriebenen Aggregaten compoundiert werden.

E.2

Tetrafluorethylenpolymerisat in Pulverform mit einer Teilchengröße von 500 bis 650 µm und einer Dichte von 2,18 bis 2,20 g/cm$^3$ der Firma Hoechst (Hostaflon TF 2026).

F. Halogenverbindung

Ein Copolycarbonat aus Bisphenol A mit 10 Gew.-% Tetrabrombisphenol A mit einer relativen Lösungsviskosität von 1,284, gemessen in $CH_2Cl_2$ bei 25° C und einer Konzentration von 0,5 Gew.-%, Gehalt an Brom: 5 Gew.-%.

## 2 Herstellung und Prüfung der eingesetzten Formmassen

Das Mischen der Komponenten erfolgte auf einem 3-l-Innenkneter (Beispiele 3; 5 bis 17) bzw. auf einem Doppelwellenextruder (Massetemperatur 300° C, Beispiele 2; 4).

Die Herstellung von Formkörpern erfolgte auf einer Spritzgießmaschine bei 270° C (Beispiele 3; 5; 7; 9; 11 bis 13), 280° C (Beispiele 14 bis 17) bzw. 290° C (Beispiele 1; 2; 4; 6; 8; 10).

Das Brandverhalten der Proben wurde nach UL-Subj. 94 V in Prüfkörperdicken von 1,6 und 3,2 mm gemessen. Der UL 94 V-Test wird wie folgt durchgeführt:

Substanzproben werden zu Stäben der Abmessungen 127 x 12,7 x 3,2 bzw. 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jeden Zündvorgang werden beobachtet und danach die Probe bewertet. Zum Entzünden der Probe wird ein Bunsenbrenner mit einer 10 mm (3/8 inch) hohen blauen Flamme von Erdgas mit einer Wärmeeinheit von 3,73 x 10$^4$ kJ/m$^3$ (1000 BUT per cubic foot) benutzt.

Die UL 94 V-O-Klassifizierung umfaßt die nachstehend beschriebenen Eigenschaften von Materialien, die gemäß der UL 94-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N. B. heißt "nicht bestanden" und ist die Klassifizierung von Proben, die eine Nachbrennzeit von >30 s aufweisen.

Die Bestimmung der Kerbschlagzähigkeit erfolgte nach Methode ISO 180 an Stäben der Abmessung 80 x 10 x 4 mm bei Raumtemperatur.

Die Fließfähigkeit wird beurteilt über den bei der verwendeten Spritzgießmaschine (Massetemperatur

Beispiele 1 bis 13: 290 °C; Beispiele 14 bis 17: 280 °C) notwendigen Fülldruck (s. Johannaber, Kunststoffe 74, 1984; 1; Seiten 1 bis 5) zur Herstellung von Stäben der Abmessung 80 x 10 x 4 mm.

Zusammensetzung und Eigenschaften der Formmassen können der nachstehenden Tabelle 1 entnommen werden.

Wie Vergleichsbeispiele 1 bis 4 zeigen, weist weder Komponente A. allein noch in Kombination mit Halogenverbindung F. bzw. fluoriertem Polyolefin E.1 bzw. Phosphat D. die gewünschte Eigenschaftskombination aus hoher Flammwidrigkeit, Zähigkeit und günstigem Fließverhalten (niedriger Fülldruck) auf.

Erst das erfindungsgemäße Beispiel 5, das sowohl E.1 als auch D enthält, erfüllt dieses Kriterium (UL 94 V O bei günstigem Fülldruck und ausreichender Zähigkeit).

Vergleichsbeispiele 6, 8 und 10 zeigen, daß Komponente A. auch in Kombination mit Pfropfpolymerisat B.1 bzw. SAN-Copolymerisat C.1 bzw. Polyethylenterephthalat C.2 keine ausreichende Flammwidrigkeit aufweist (jeweils "nicht bestanden" nach UL 94 V mit Ausnahme von V2 für Beispiel 10 bis 3,2 mm).

Erst in Verbindung mit dem erfindungsgemäßen Flammschutz D. und E.1 (Beispiele 7, 9, 11) resultieren die erwünschten Eigenschaften.

Die weiteren Beispiele zeigen, daß auch Gemische von Komponenten B. und C. (Beispiel 12) sowie eine Halogenverbindung F. (Beispiel 13) in erfindungsgemäß geeigneten Formmassen eingesetzt werden können.

Für erfindungsgemäße Formmassen geeignet sind weiterhin Pfropfpolymerisate B.2 auf Silikonkautschuken (Beispiele 14 bis 17) sowie fluorierte Polyolefine in der nicht bevorzugten Pulverform E.2 (Beispiele 15, 16).

Wie ein Vergleich der Beispiele 16 und 17 zeigt, weisen bei ansonsten gleicher Zusammensetzung Formmassen mit der erfindungsgemäß bevorzugten Einbringung des fluorierten Polyolefins über eine Cofällung E.1 die günstigeren Eigenschaften auf.

Tabelle 1

| Zusammensetzung und Eigenschaften der Formmassen | | | | | | | | | | | | | |
|---|---|---|---|---|---|---|---|---|---|---|---|---|---|
| Beispiel | **Komponenten** [Gew.-Tl.] | | | | | | | | | Kerbschlagzähigkeit $[kJ/m^2]$ | Fülldruck [bar] | UL 94 V | |
| | A | B1 | B2 | C1 | C2 | D | E1 | E2 | F | | | 1,6 mm | 3,2 mm |
| 1[1)] | 100 | | | | | | | | | 50,2 | 233 | N.B. | N.B. |
| 2[1)] | 100 | | | | | | | | 10 | 51,2 | 215 | V2 | V2 |
| 3[1)] | 100 | | | | | 10 | | | | 9,8 | 99 | V2 | V0 |
| 4[1)] | 100 | | | | | | 3,1 | | | 49,0 | 243 | N.B. | V1 |
| 5 | 100 | | | | | 10 | 3 | | | 18,2 | 97 | V0 | V0 |
| 6[1)] | 90 | 10 | | | | | | | | 42,1 | 237 | N.B. | N.B. |
| 7 | 90 | 10 | | | | 10 | 3 | | | 53,6 | 97 | V0 | V0 |
| 8[1)] | 90 | | | 10 | | | | | | 26,1 | 105 | N.B. | N.B. |
| 9 | 90 | | | 10 | | 10 | 3 | | | 13,7 | 52 | V0 | V0 |
| 10[1)] | 90 | | | | 10 | | | | | 27,6 | 155 | N.B. | V2 |
| 11 | 90 | | | | 10 | 10 | 3 | | | 13,1 | 58 | V1 | V0 |
| 12 | 90 | 5 | | 5 | | 10 | 3 | | | 56,3 | 74 | V0 | V0 |
| 13 | 100 | | | | | 7 | 2 | | 20 | 18,0 | 119 | V0 | V0 |
| 14 | 90 | | 10 | | | 10 | 3 | | | 40,0 | 123 | V0 | V0 |
| 15 | 90 | | 10 | | | 10 | | 0,3 | | 38,0 | 165 | V0 | V0 |
| 16 | 90 | | 10 | | | 4 | | 0,3 | | 33,0 | 243 | V1 | V0 |
| 17 | 90 | | 10 | | | 4 | 3 | | | 33,0 | 222 | V0 | V0 |

[1)] Vergleichsbeispiel

**Ansprüche**

1. Thermoplastische Formmassen bestehend aus

A) 40 bis 100 Gew.-Teilen eines voll-aromatischen Polyesters, gegebenenfalls

B) 0,1 bis 40 Gew.-Teilen eines Pfropfpolymerisats, gegebenenfalls

C) 0,1 bis 40 Gew.-Teilen eines thermoplastischen Harzes, welches

C1) ein Copolymerisat aus

C1.1) 50 bis 95 Gew.-Teilen Styrol, α-Methylstyrol, kernsubstituiertem Styrol, Methylmethacrylat oder Mischungen daraus und

C1.2) 50 bis 5 Gew.-Teilen (Meth-)Acrylnitril, Methylmethacrylat, Maleinsäureanhydrid, N-substituiertem Maleinimid oder Mischungen daraus, oder

C2) ein Polyalkylenterephthalat darstellt, wobei die Summe der Gewichtsteile aus A) bis C) jeweils 100 Gew.-Teile ergeben soll, sowie

D) 0,5 bis 20 Gew.-Teilen, bezogen auf 100 Gew.-Teile der Summe aus A) bis C), einer Phosphorverbindung der Formel

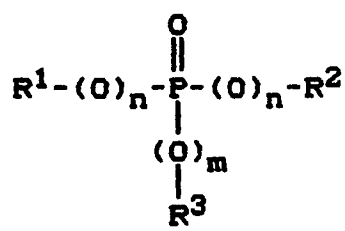

,

worin

$R^1$, $R^2$ uhd $R^3$ unabhängig voneinander gegebenenfalls halogeniertes $C_1$-$C_8$-Alkyl oder gegebenenfalls halogeniertes $C_6$-$C_{20}$-Aryl,

m 0 oder 1 und

n 0 oder 1 bedeuten, und

E) 0,5 bis 5 Gew.-Teilen, bezogen auf 100 Gew.-Teile der Summe aus A) bis C), eines fluorierten Polyolefins mit mittleren Teilchengrößen von 0,05 bis 1000 µm, einer Dichte von 1,2 bis 2,3 g/cm$^3$ und einem Fluorgehalt von 65 bis 76 Gew.-%, und gegebenenfalls

F) 0,1 bis 30 Gew.-Teilen, bezogen auf 100 Gew.-Teile der Summe aus A) bis C), einer nieder-oder hochmolekularen Halogen-(Br, Cl)-Verbindung.

2. Thermoplastische Formmassen gemäß Anspruch 1, dadurch gekennzeichnet, daß sie 60 bis 98 Gew.-Teile der Komponente A) enthalten.

3. Thermoplastische Formmassen gemäß Ansprüchen 1 und 2, dadurch gekennzeichnet, daß sie 1 bis 20 Gew.-Teile der Komponente B) enthalten.

4. Thermoplastische Formmassen gemäß Ansprüchen 1 bis 3, dadurch gekennzeichnet, daß sie 1 bis 30 Gew.-Teile der Komponente C) enthalten.

5. Thermoplastische Formmassen gemäß Ansprüchen 1 bis 4, dadurch gekennzeichnet, daß sie 1 bis 15 Gew.-Teile der Komponente D) enthalten.

6. Thermoplastische Formmassen nach Ansprüchen 1 bis 5, dadurch gekennzeichnet, daß sie 0,1 bis 1 Gew.-Teil der Komponente E) enthalten.

7. Thermoplastische Formmassen nach Ansprüchen 1 bis 6, dadurch gekennzeichnet, daß sie 0,5 bis 20 Gew.-Teile der Komponente F) enthalten.

8. Thermoplastische Formmassen nach Ansprüchen 1 bis 7, dadurch gekennzeichnet, daß die Komponente D) in Form einer koagulierten Mischung von Emulsionen der fluorierten Polyolefine E) mit einer mittleren Teilchengröße von 0,05 bis 20 µm und einer Dichte von 1,2 bis 1,9 g/cm$^3$ mit Emulsionen von Pfropfpolymerisaten B) eingesetzt wird und wobei das Gewichtsverhältnis von Pfropfpolymerisat B) zu fluoriertem Polyolefin E) bei 95:5 bis 60:40 und der Gehalt an zusätzlichen Mengen B), bezogen auf 100 Gew.-Teile A) bis C), bei 0,1 bis 4 Gew.-Teilen liegen.

9. Verfahren zur Herstellung der Formmassen nach Ansprüchen 1 bis 8, dadurch gekennzeichnet, daß man die Komponenten A), D) und E) und gegebenenfalls die Komponenten B), C) und F) sowie gegebenenfalls Stabilisatoren, Farbstoffe, Pigmente, Fließmittel, Füll- und Verstärkungsstoffe, Entformungsmittel, Nukleiermittel und/oder Antistatika nach erfolgter Vermischung bei Temperaturen von 200 bis 330 °C in gebräuchlichen Aggregaten schmelzcompoundiert oder schmelzextrudiert, wobei die Komponente E) vorzugsweise in Form einer koagulierten Mischung mit der Komponente B) eingesetzt wird.

10. Verwendung der Formmassen nach Ansprüchen 1 bis 9 zur Herstellung von Formkörpern.